(19) Europäisches Patentamt
European Patent Office
Office européen des brevets

(11) Publication number: **0 512 540 A1**

# (12) EUROPEAN PATENT APPLICATION

(21) Application number: **92107703.8**

(22) Date of filing: **07.05.92**

(51) Int. Cl.[5]: **C08J 7/04**, C09D 133/14, C09D 133/26, C09D 5/24

(30) Priority: **09.05.91 US 697377**

(43) Date of publication of application: **11.11.92 Bulletin 92/46**

(84) Designated Contracting States: **DE FR GB IT LU NL**

(71) Applicant: **HOECHST CELANESE CORPORATION**
**Route 202-206 North**
**Somerville, N.J. 08876(US)**

(72) Inventor: **Cooper, Emanuiel**
**Route 1, Box 36**
**Nesmith, South Carolina 29580(US)**

(74) Representative: **Schweitzer, Klaus, Dr. et al**
**c/o Hoechst AG, Werk Kalle-Albert, Zentrale Patentabteilung, Postfach 35 40, Rheingaustrasse 190**
**W-6200 Wiesbaden 1(DE)**

## (54) Permanent antistatic coating and coated polymeric film.

(57) The invention relates to a permanent antistatic composition, a thermoplastic film having the antistatic coating thereon, and a method for priming a thermoplastic film with the antistatic composition. The antistatic composition comprises, on a dry weight basis, from 60 to 85 % by weight of a quaternary salt of alkylamino acrylate or alkylamino acrylamide, from 5 to 40 % by weight of one or more acrylates, and from 0 to 10 % by weight of a suitable crosslinker. The preferred quaternary salt of alkylamino acrylate is Ethanaminium, N,N,N-trimethyl-2-[(2-methyl-1-oxo-2-propenyl)oxy]-ethyl-ammonium-methyl sulfate. The preferred quaternary salt of alkylamino acrylamide is (3-acrylamidopropyl) trimethyl ammonium chloride, also known as 1-propanaminium, N,N,N-trimethyl-3-[(1-oxo-2-propenyl)amino]-propenyl-ammonium-chloride.

EP 0 512 540 A1

This invention is directed to a permanent antistatic polymeric film, a method of producing such a film, and the antistatic coating composition. In particular, the present invention is directed to an antistatic coating which, when applied to a polymeric film, yields a film having permanent antistatic properties.

The growth of packaging, reprographic, microfilm and magnetic markets has significantly increased the utilization of plastic film materials in these markets. In particular, biaxially oriented plastic film made from polyethylene, polypropylene, nylon, polyester, polystyrene and polycarbonate, may be employed for these purposes. One of the problems associated with the use of such biaxially oriented films is the tendency of these materials to accumulate an electrostatic charge on the surface as a result of handling or processing of the film, especially at low relative humidity. The nonconductive nature of most polymeric films allows for an accumulation of high electrostatic potential. These electrostatic charges are most pronounced during surface separation of the film, such as winding or unwinding, or further processing the film over rolls and similar equipment. The electrostatic charges attract not only dust and other contaminants, but additionally attract other film, causing film blocking during processing. To overcome this serious problem, antistatic films have been developed. Antistatic films are usually formed by the topical treatment of an antistatic coating onto one or more surfaces of the film. Many of the coatings have successfully reduced the electrostatic properties of the film to satisfactory low levels. However, the coatings are easily removed from the surface by routine contact (rub-off) or by using organic solvents or water during further processing of the film (dissolve-off).

Various antistatic coatings are known in the prior art. US-A-4,214,035 and US-A-4,302,505 disclose a polymeric film having a latex coating comprising a nitrate salt and a polyacrylate or acrylic terpolymer. While this antistatic coating has suitable slip, the antistatic coating is not permanent and can easily be removed in a hot aqueous bath.

Another antistatic coated film is disclosed in US-A-4,642,263 which discloses an antistatic film having a polymeric binder and a quaternary ammonium salt. A film coated with such an antistatic coating composition has good clarity, good slip properties, and remarkably good antistatic properties, but the antistatic properties can be substantially reduced by submitting the film to a hot aqueous bath.

Another problem associated with prior antistatic films is that many of the antistatic coatings cause blocking. Blocking occurs when the antistatic layer on the film has a coefficient of friction sufficiently high that one layer of the film does not slip over another, or over rollers, or other equipment. Thus, these is a need to develop an antistatic coating which has the ability to remain bonded with the surface of the film, permanently, and particularly during later treatments of printing or coating of the film for further use, as well as producing an antistatic coated film which has a coefficient of friction sufficiently low so that the film has acceptable slip properties.

The present invention, in the broadest sense, relates to a permanent antistatic coating composition including, on a dry weight basis:

i) from about 60 to 85 % by weight of a quaternary salt of alkylamino acrylate (hereinafter AAL), such as Ethanaminium, N,N,N-trimethyl-2-[(2-methyl-1-oxo-2-propenyl)oxy]-ethyl-ammonium-methyl-sulfate, or a quaternary salt of alkylamino acrylamide (hereinafter AAA), such as (3-Acrylamidopropyl)-trimethylammonium-chloride, or a suitable mixture of these; and

ii) from about 5 to 40 % by weight of one or more acrylates; and

iii) from about 0 to 10 % by weight of a suitable crosslinker.

In the broadest sense, the present invention also comprises a polymeric film having a permanent antistatic coating composition thereon, wherein the permanent antistatic coating, on a dry weight basis, comprises:

i) from about 60 to 85 % by weight of either AAL or AAA or a suitable mixture of these;

ii) from about 5 to 40 % by weight of one or more acrylates; and

iii) from about 0 to 10 % by weight of a suitable crosslinker.

In the broadest sense of the present invention, there is also disclosed a method for antistatically priming a polymeric film comprising:

i) coating said film with a permanent antistatic composition comprising, on a dry weight basis, from about 60 to 85 % by weight of AAL or AAA, or a suitable mixture of these; from about 5 to 40 % by weight of one or more acrylates; and from about 0 to 10 % by weight of a suitable crosslinker; and

ii) drying said film.

Polymeric films useful in the present invention may be manufactured from polyester, polyolefin such as polyethylene or polypropylene, polyamide, such as nylon, polystyrene and polycarbonate. The present invention is particularly applicable to oriented films based on crystallizable polyesters such as those resulting from the poly-condensation of a glycol with either terephthalic acid or dimethyl terephthalate. The preferred film is a polyethylene terephthalate (polyester) film.

The film may be produced by manufacturing techniques well known in the art. For example, polyester film may be made by melt extruding polyester as an amorphous sheet onto a polished revolving casting drum to form a cast sheet of the polymer. Thereafter, the polyester sheet is actually stretched or drawn in one or more directions, at a temperature range of 90 to 100 °C, to orient the film and provide it with sufficient physical properties. For example, the film may be drawn in the direction of extrusion (longitudinal), or perpendicular to the direction of extrusion (transverse). Biaxially oriented film is drawn in both directions. For polyester film, the amount of stretching, to impart strength and toughness to the film, generally ranges from about 2.5 to about 5.0 times the original cast sheet dimensions in one or more directions. The stretching operations for any polymeric film are generally carried out at temperatures in the range from about the second order transition temperature of the polymer to below the temperature at which the polymer softens and melts.

Where necessary, the film is heat treated, after stretching, for a period of time necessary to crystallize the polyester film. Crystallization imparts stability and good tensile properties to the film. When polyethylene terephthalate is heat treated, it is subjected to a heat setting temperature in the range of between 190 °C and 240 °C.

The antistatic coating composition of the present invention is preferably in the form of an aqueous dispersion but may also be in an organic solvent solution. An aqueous dispersion is preferred for both environmental reasons and health of the employees. The permanent antistatic coating composition may be applied in-line during the film manufacturing process. Typically, the coating composition may be applied in the pre-draw stage, i.e. before the film is stretched in any direction, as disclosed in GB-B-1,411,564, or between stages, if a biaxially oriented film is being produced, as disclosed, for example, in US-A-4,214,035; or the coating composition may be applied post draw, but before heat setting as disclosed, for example, in US-A-3,322,553. In one preferred embodiment, the coating is applied in-line, after the film is uniaxially stretched, but before the film is stretched in the opposite direction.

Regardless of when the permanent antistatic coating composition is applied to the polymeric film, it is preferred to make the surface of the polymeric film more receptive to bonding with the permanent antistatic coating composition. Such surface treatments are well known in the prior art and corona treatment is the most popular. For polyester, corona treatment of about 3 to 7 watts/0,1 $m^2$/min (3 to 7 watts/$ft^2$/min) is typical.

The film may be coated with the permanent antistatic coating composition by any well known technique employed in the art. For example, the coating may be applied by a roller, by spray coating, by slot coating, by immersion coating, reverse gravure roll coating, or gravure roll coating.

One the permanent antistatic coating composition is applied to the film, the aqueous portion (or organic solvent, if solvent based) of the composition evaporates leaving a dried polymeric film comprising approximately from about 60 to 85 % by weight of AAL and/or AAA; from about 5 to 40 % by weight of one or more acrylates; and from about 0 to 10 % by weight of a crosslinker. The coating composition, when applied to the film, is such to yield a final dry coating thickness within the range of from about $2.54 \times 10^{-7}$ to $2.54 \times 10^{-5}$ cm ($10^{-7}$ to $10^{-5}$ inch), which translates into a solids level, on a weight basis, of from 0.00305 to 0.305 g/$m^2$.

Although water is the preferred carrier for the coating composition, suitable organic solvents could also be employed. Suitable organic solvents may include alcohols, chlorinated hydrocarbons, esters, ethers, glycol and ether/ester derivatives, ketones, and dimethyl formamide.

Suitable quaternary salts are AAL and AAA. A generic example of AAL is:

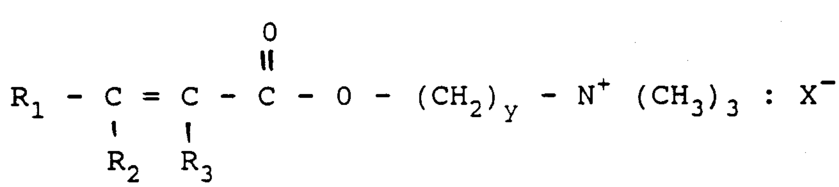

A generic formula for AAA is:

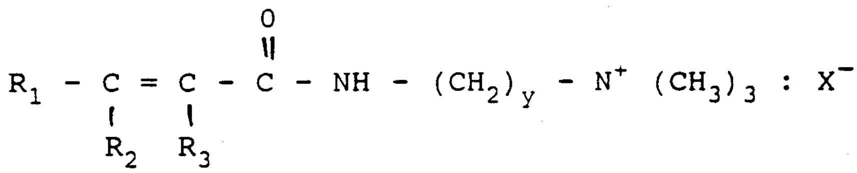

wherein $R_1$, $R_2$ and $R_3$ (which may be the same or different) for either formula may be hydrogen, or an alkyl containing 1 to 8 carbon atoms, or the like; y = 1 to 8; and X may be anions selected from halogens such as chloride; sulfates; sulfonates; alkyl sulfonates such as methyl sulfonate; carbonates; alkyl carbonates such as methyl carbonate; nitrates; phosphates; alkyl phosphates; and the like, or mixtures of these.

Preferably, for AAL, $R_1$ and $R_2$ = hydrogen, $R_3$ = methyl, y = 2 and X = methyl sulfonate, forming the quaternary salt ethanaminium, N,N,N-trimethyl-2-[(2-methyl-1-oxo-2-propenyl)oxy]-ethyl-ammonium-methyl sulfate; sold under the tradename MADQUAT Q5 from Norsolac, Inc. of Baltimore, MD, USA. It is a quaterization product of dimethylaminoethyl methacrylate and dimethyl sulfate.

Preferably, for AAL, $R_1$, $R_2$ and $R_3$ = hydrogen, y = 3 and X = chloride, forming the quaternary salt (3-acrylamidopropyl)trimethyl ammonium chloride also known as 1-propanaminium, N,N,N-trimethyl-3-[(1-oxo-2-propenyl)-amino]propyl-ammonium-chloride; sold under the tradename BC QUAT A4090 from Stockhausen, Inc. of Greensboro, N.C., USA. Other AAA quaternary salts may be produced in accordance with US-A-4,910,325.

Suitable acrylates for the permanent antistatic coating composition may be methyl acrylate, ethyl acrylate, propyl acrylate, butyl acrylate, hexyl acrylate, 2-ethylhexyl acrylate, methyl methacrylate, and the like. More than one acrylate may be employed. Preferably, ethyl acrylate and methyl methacrylate are employed.

Suitable crosslinkers for the coating composition may be self-crosslinking components such as in N-methylolacrylamide and N-methylol methacrylamide or other crosslinking components such as itaconic acid or anhydride, arylic acid, alkyl alcohol, maleic acid, maleic anhydride, acrylamide or methacrylamide crosslinked with melamine formaldehyde or urea formaldehyde, aziridines, glycouril-formaldehyde, benzoguanamines, acrylamido glycolic acid, bis-acrylamide glycol, glyoxal, formaldehyde, diacrylamide acetic acid or other suitable crosslinkers. The preferred crosslinker of the present invention is N-methylolacrylamide.

In the preferred embodiment the coating composition is aqueous based. The aqueous based composition can be prepared by emulsion polymerization by a conventional polymer synthesis from about 40 °C to 60 °C. In practice, the three components and one or more various surfactants are slowly metered into an aqueous solution. The various surfactants may be anionic or nonionic surfactants. Suitable nonionic surfactants are alkylphenol ethoxylates, such as octyl phenol ethoxylate available from Rohm & Haas Co. in Philadephia, Pa., USA, or from Union Carbide Corp. in New York, N.Y., USA; or BASF in Spartanburg, S.C., USA. Suitable anionic surfactants include sodium lauryl sulfate or sodium dodecyclbenzene sulfonate. The aqueous solution also contains a redox initiator system as well as additional quantities of the anionic and nonionic surfactants.

Typical initiators for emulsion polymerization reactions are peroxide compounds such as lauryl peroxide, benzoyl peroxide, methyl ethyl ketone peroxide, and the like.

As in all emulsion polymerization reactions, water quality is an important consideration. Deionized water should be used since the presence of certain multivalent ions in uncontrolled concentrations can interfere with both the initiation process and the action of the emulsifier.

As the comonomer emulsion is slowly metered into the water containing the surfactants and the initiator, copolymerization of the three comonomers begins, thereby forming particles of the coating composition.

Near the completion of the polymerization reaction, the reaction mixture will comprise small coating composition particles suspended in water due to the nonionic and anionic surfactants. This latex emulsion may typically have a solids level of from 25 to 30 percent and thus it will be necessary to dilute it with water or a solvent to achieve a more usable range for coating. Higher solids levels will result in agglomeration of the particles into larger particles or clumps of particles which will tend to precipitate from the solution as grit.

The above described emulsion polymerization process is well known and described in "Principles of Polymerization" by George Odian, second edition, published by John Wiley and Sons.

The coating of the present invention may be applied to the base film as an aqueous dispersion having a

solids concentration within the range of about 0.5 to 15 percent by weight, preferably about 1 to 8 percent by weight. The preferred solids level is such as to yield a final dry coating thickness within the range of about $2.54x10^{-7}$ to $2.54x10^{-5}$ cm, which translates into a solids level on a weight basis of from 0.00305 to 0.305 $g/m^2$. The preferred thickness range of the dried coating is from about $2.54x10^{-7}$ to $7.62x10^{-6}$ cm, with an optimum thickness of about $6.25x10^{-7}$ cm.

Suitable antistatic films are those films in which the surface resistivity is less than $10^{12}$ ohms and preferably from approximately $10^9$ to $10^{11}$ ohms. Films having a surface resistivity higher than this value do not adequately dissipate static charge. Films having a surface resistivity less than $10^9$ ohms are considered to be conductive or semiconductive, but are not economically beneficial for most antistatic applications.

The permanent antistatic test procedure comprises submersing the permanent antistatic polymeric film into a hot water bath [at 68 °C (at 155 °F)] for a period of two minutes. The polymeric film was then dried in a convection oven at 110 °C for at least ten minutes and permitted to cool for a minimum of one hour or more. The surface resistivity, in ohms, was then determined according to ASTM D-257-66 at 23 °C and 50 % relative humidity. The surface resistivity was determined by a Keithley Model 6105 capable of measuring from $10^3$ to $5x10^{18}$ ohms at 50 % relative humidity. Static decay was also determined in accordance with Federal Test Method Standard 101B, method 4046. The static decay was determined on an ETS (Electro-Tech Systems, Inc.) model 406B.

Although a film may have a suitable surface resistivity, it may not be able to adequately dissipate a charge. Good antistatic film can dissipate a charge very quickly. Generally, antistatic films which demonstrated the capability of dissipating an induced 5,000 volt charge within 2.0 seconds were satisfactory.

## Example 1

Eight different permanent antistatic compositions were prepared and applied to at least three polyester film samples made by the Hoechst Celanese Corporation at Greet, S.C., USA, and tested. Each composition was coated on Hostaphan 4000 polyester film with a reverse gravure roll at a coating concentration of between 4 and 6 % solids. The surface resistivity initially, and after two minutes of hot aqueous rinse at 68 °C (155 °F) was measured. A static charge of 5,000 volts was applied to the film samples. The time a 5,000 volt charge dissipated to 10 % of its original value was measured initially and after the two minute hot aqueous rinse. A static decay under 2.0 seconds was acceptable. The results are set forth in Table 1.

Table 1

| Percent Composition (%) by Weight | | | | | | | |
|---|---|---|---|---|---|---|---|
| Sample | 1 | 2 | 3 | 4 | 5 | 6 | 7 |
| Methyl Methacrylate | 15 | 15 | 6 | 30 | 40 | 40 | 35 |
| Ethyl Acrylate | 15 | 15 | 6 | 15 | 25 | - | - |
| N-Methylol Acrylamide | 5 | 5 | 3 | 5 | 5 | 5 | 5 |
| Madquat Q5 | 65 | - | 85 | 50 | 30 | 55 | 60 |
| BC Quat | - | 65 | - | - | - | - | - |
| % Solids | 5 | 4 | 4 | 6 | 5 | 5 | 4.6 |
| **Surface Resistivity (Ohms)** | | | | | | | |
| Initial | $6.6x10^{10}$ | $7x10^{9}$ | $3x10^{10}$ | $5x10^{12}$ | $7x10^{17}$ | $8x10^{12}$ | $2x10^{10}$ |
| After 2 min Hot Aqueous | $3x10^{11}$ | $3x10^{11}$ | $5x10^{10}$ | $2x10^{12}$ | $2x10^{15}$ | $4x10^{12}$ | $4x10^{10}$ |
| **Static Decay (Sec) at 23 °C, 50 % Relative Humitity** | | | | | | | |
| Initial | 0.08 | 0.03 | 0.14 | 0.02 | >5.0 | 0.03 | 0.06 |
| After 2 Min. Hot Aqueous | 0.05 | 0.64 | 0.08 | 0.77 | >5.0 | 0.52 | 0.05 |
| **Coefficient of Friction** | | | | | | | |
| Static | 0.62<br>0.68 | Uncoated/Coated<br>Coated/Coated | | 0.37<br>0.33 | | | |
| Kinetic | 0.75<br>0.86 | Uncoated/Coated<br>Coated/Coated | | 0.38<br>0.43 | | | |

A comparison of COF values between sample 1 and sample 7 demonstrates that the "harder" polymer (higher glass transition temperature $T_g$) has better slip properties.

## Example 2

In Example 1, a crosslinker was employed in each sample. It is possible to employ the concepts of the present invention without employing any crosslinker, as demonstrated by this Example. Three samples were prepared (according to Example 1) employing various amounts (or 0 %) of crosslinker. The initial surface resistivity, surface resistivity after hot aqueous rinse and slip properties were determined for each sample. The results are set forth in Table 2.

Table 2

| Sample | | 1 | 2 | 3 |
|---|---|---|---|---|
| Methyl Methacrylate | | 35 | 30 | 30 |
| N-Methylol Acrylamide | | 5 | 2 | -0- |
| Madquat Q5 | | 60 | 68 | 70 |
| % Solids | | 4 | 4 | 4 |
| **Surface Resistivitiy (Ohms) at 23 °C, 50 % Rel. Hum.** | | | | |
| Initial | | $3x10^{11}$ | $5x10^{11}$ | $5x10^{11}$ |
| After 2 min. Hot Aqueous | | $2x10^{10}$ | $6x10^{11}$ | $2x10^{11}$ |
| **Coefficient of Friction** | | | | |
| Static | coated/uncoated | 0.59 | 0.60 | 0.51 |
| | coated/coated | 0.47 | 0.59 | 0.57 |
| Kinetic | coated/uncoated | 0.50 | 0.81 | 0.79 |
| | coated/coated | 0.49 | 0.55 | 0.54 |

Sample 3 demonstrates that good results are achieved with no crosslinker as compared with 5 % crosslinker (sample 1) and 2 % crosslinker (sample 2).

Thus, it is apparent that there has been provided, in accordance with the provision, a permanent antistatic coating that fully satisfies the objects, aims and advantages supported above. While the invention has been described in conjunction with the specific embodiments thereof, it is evident that many alternatives, modifications and variations will be apparent to those skilled in the art in light of the foregoing description.

Accordingly, it is intended to embrace all such alternatives, modifications and variations as fall within the spirit and broad scope of the invention.

## Claims

1. A permanent antistatic coating composition for polymeric films, said coating composition comprising, on a dry weight basis:
   i) from 60 to 85 % by weight of a quaternary salt of an alkylamino acrylamide or an alkylamino acrylate;
   ii) from 5 % to 40 % by weight of one or more acrylates; and
   iii) from 0 to 10 % by weight of a suitable crosslinker.

2. The coating composition of claim 1, wherein said quaternary salt of an alkylamino acrylate has the general formula

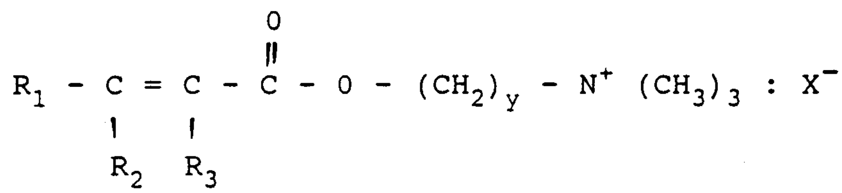

wherein $R_1$, $R_2$ and $R_3$ are hydrogen or an alkyl group containing 1 to 8 carbon atoms; y = 1 to 8; and X is an anion selected from halogens, sulfates, sulfonates, alkyl sulfonates, carbonates, nitrates, phosphates, alkyl phosphates, and mixtures of these.

**3.** The coating composition of claim 2, wherein $R_1$ and $R_2$ are hydrogen, $R_3$ is a methyl group, and y = 2.

**4.** The coating composition of claim 3, wherein X is $CH_3OSO_3^-$ yielding the quaternary salt ethanaminium, N,N,N-trimethyl-2-[(2-methyl-1-oxo-2-propenyl)oxy]-ethyl-ammonium-methyl sulfate chemically illustrated as

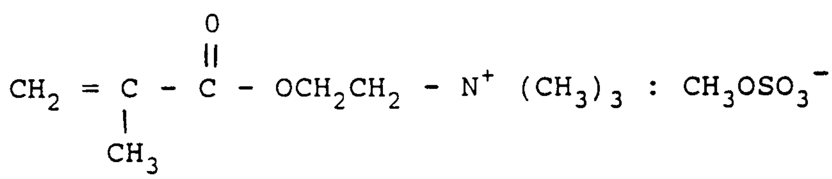

**5.** The coating composition of claim 1, wherein said quaternary salt of an alkylamino acrylamide has the general formula

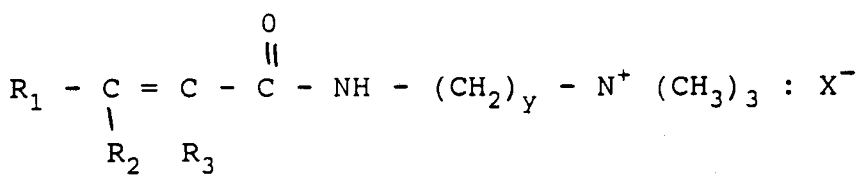

wherein $R_1$, $R_2$ and $R_3$ are hydrogen or an alkyl group containing 1 to 8 carbon atoms, y = 1 to 8; and X is an anion selected from halogens, sulfates, sulfonates, alkyl sulfonates, carbonates, nitrates, phosphates, alkyl phosphates and mixtures of these.

**6.** The coating composition of claim 5, wherein $R_1$, $R_2$ and $R_3$ are hydrogen, y = 3, and X is chloride.

**7.** The coating composition of claim 1, wherein said acrylates may be selected from the class comprising methyl acrylate, ethyl acrylate, propyl acrylate, butyl acrylate, methacrylate, methyl methacrylate, ethyl methacrylate, propyl methacrylate, hexyl acrylate, 2-ethyl-hexyl acrylate, octyl acrylate, and mixtures of these.

**8.** The coating composition of claim 1, wherein said crosslinker may be selected from the class of N-methylolacrylamide, N-methylol methacrylamide, melamine or urea formaldehyde crosslinked with one or more of itaconic acid, itaconic anhydride, acrylic acid, allyl alcohol, maleic acid, maleic anhydride, acrylamide and methacrylamide crosslinked with melamine formaldehyde or urea formaldehyde, aziridines, glycouril-formaldehyde, benzoguanamines, acrylamido glycolic acid, bis-acrylamide glycol, glyoxal, formaldehyde, and diacrylamide acetic acid.

**9.** A polymeric film having permanent antistatic properties, said film comprising:
A) an oriented polymeric film; and
B) an effective amount of a coating, according to one or more of claims 1 to 8, on at least one side of said film, sufficient to provide permanent antistatic properties to said film.

**10.** The polymeric film of claim 9, wherein said oriented polymeric film is selected from the class of polyester, polyolefin, polyamide, polyacetal and polycarbonate.

**11.** The polymeric film of claim 9 or 10, wherein said film is biaxially oriented.

**12.** The polymeric film of one or more of claims 9 to 11, wherein said coating is on both sides of said polymeric film.

**13.** The polymeric film of one or more of claims 9 to 12, wherein said coating on said film is from $2.54x10^{-7}$ to $2.54x10^{-4}$ cm ($10^{-7}$ to $10^{-4}$ inch) thick.

**14.** The polymeric film of one or more of claims 9 to 13, wherein said film has a surface resistivity of less than $1x10^{12}$ ohms, and a static decay time of less than 2 seconds.

**15.** A method for priming a polymeric film to provide permanent antistatic properties, comprising:
A) coating a polymeric film with an effective amount of a permanent antistatic composition according to one or more of claims 1 to 8; and
B) drying said coating on said film.

**16.** The method of claim 15, wherein said polymeric film is suitably corona treated before said coating step.

**17.** The method of claim 15, wherein said coating is effected in-line during the manufacturing of said polymeric film.

**18.** The method of claim 17, wherein said in-line coating occurs intradraw during the film manufacturing process.

**19.** The method of claim 17, wherein said coating is applied to said film,on a dry weight basis, in a range of $2.54x10^{-7}$ to $2.54x10^{-4}$ cm ($10^{-7}$ to $10^{-4}$ inch).

**20.** The method of claim 15, wherein said one or more acrylates are selected from the class comprising methyl acrylate, ethyl acrylate, propyl acrylate, butyl acrylate, hexyl acrylate, 2-ethyl, hexyl acrylate, octyl acrylate, methacrylate, methyl methacrylate, ethyl methacrylate and propyl methacrylate.

**21.** The method of claim 15, wherein said polymeric film is selected from the class of polyester, polyolefin, polyamide, polyacetal, and polycarbonate.

**22.** The method of claim 21, wherein said polymeric film is biaxially oriented.

European Patent Office

# EUROPEAN SEARCH REPORT

Application Number

EP 92 10 7703

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 371 378 (HENKEL KGAA)<br>* page 4, line 2 - line 15; examples 3,4 *<br>--- | 1,7 | C08J7/04<br>C09D133/14<br>C09D133/26<br>C09D5/24 |
| X | US-A-4 931 522 (CATENA)<br>* column 4, line 52 - line 60; claims *<br>--- | 1-3,9,<br>10,15 | |
| X | FR-A-2 412 597 (DAICEL LTD)<br>* claims 1,2,11-14; example 1 *<br>----- | 1-3,9-23 | |
| | | | TECHNICAL FIELDS SEARCHED (Int. Cl.5 ) |
| | | | C08J<br>C09D<br>C08F |

The present search report has been drawn up for all claims

| Place of search | Date of completion of the search | Examiner |
|---|---|---|
| THE HAGUE | 17 AUGUST 1992 | D. Schüler |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document